# EUROPEAN PATENT SPECIFICATION

(11) **EP 4 149 695 B1**
(45) Date of publication and mention of the grant of the patent: **20.09.2023**
(21) Application number: 22758036.2
(22) Date of filing: 06.07.2022
(51) Int. Cl.: B07C 5/34, B07C 5/36, B29C 69/00, B65B 57/04

(54) **APPARATUS AND METHOD FOR CUTTING AND JOINING A CONTINUOUS STRIP OF PRODUCTS PACKAGED IN A ROW**
VORRICHTUNG UND VERFAHREN ZUM TRENNEN UND ZUSAMMENFÜGEN EINES DURCHGÄNGIGEN BANDES ZUSAMMENHÄNGEND VERPACKTER PRODUKTE
DISPOSITIF ET PROCÉDÉ DE COUPURE ET REJOINDREMENT D'UNE BANDE CONTINUE DES PRODUITS EMBALLÉS EN RANGÉE

(30) Priority: 07.07.2021 IT 202100017873
(43) Date of publication of application: 22.03.2023
(73) Proprietor: I.M.A. Industria Macchine Automatiche S.p.A., 40064 Ozzano dell'Emilia (BO) (IT)
(72) Inventor: TALE', Fabrizio, 40064 Ozzano dell'Emilia (BO) (IT)
(74) Representative: Petraz, Gilberto Luigi
(86) International application number: PCT/IT2022/050198
(87) International publication number: WO 2023/281549

(56) References cited:
- US-A1- 2013 291 486

## Description

### FIELD OF THE INVENTION

The present invention concerns an apparatus and a method for cutting and joining a continuous strip of products packaged in a row, for example, but not restricted to, straws, provided for example to accompany individual containers of drinks such as fruit juices or suchlike.

### BACKGROUND OF THE INVENTION

Automated apparatuses for the production of straws are known, which allow to make the latter starting from tubular elements fed in succession, and to individually package the straws just made in corresponding sealed wrappings.

For example, the Italian patent application for industrial invention IT-A-102020000013 822 in the name of the present Applicant describes an apparatus that has a feed unit configured to feed a plurality of tubular elements toward different processing units configured to automatically perform different processes on the tubular elements, including at least a cut to make a pointed end, a deformation to make a bellows, a fold in correspondence with the bellows so as to limit the size in length of each of the straws and the packaging of each straw in a corresponding sealed wrapping. The packaging step provides to enclose the straws, already folded and arriving from the folding unit, between two films of suitable material, for example of the transparent type for food, arriving from two corresponding reels.

This known apparatus therefore supplies the straws packaged in individual wrappings which, however, are all joined in a row along a single strip and reciprocally distanced by a constant predefined pitch. The individual wrappings are separated from each other by welding strips of the two films, generally oriented transversely with respect to the direction of feed of the strip.

Another example of an apparatus known in the state of the art is described in US patent document US 2013/0291486 relating to a device and a method for the production of packaged products joined in strips. The device comprises a plurality of sensors configured to detect whether each packaged product is compliant or defective, and cutting means configured to selectively cut the strip of products so as to convey the defective products along different paths from the compliant ones, without the possibility of re-forming a single strip after having discarded the defective products.

One disadvantage of known apparatuses is that sometimes in the row of individual wrappings there are one or more that have to be discarded due to defects in the straw and/or the individual wrapping. This is problematic because it requires detecting the presence and number of defective straws or wrappings, locating them in the continuous strip and then extracting them, cutting the strip and interrupting its continuity.

In addition to being difficult to carry out, these steps also take a long time, which has a negative impact on the productivity of the apparatus, which, in the case of the production of straws, has to be very high, in the order of a thousand straws per minute, and therefore the devices and mechanisms present in the apparatus have to operate at high speeds.

Another disadvantage of known apparatuses which operate at high speed is the fact that the step of joining the strip parts, after a previous cut, does not allow to accurately maintain the predefined pitch between the straws as described above, which has to remain constant along the strip.

There is therefore a need to perfect an apparatus and a method for cutting and joining a continuous strip of products packaged in a row that can overcome at least one of the disadvantages of the state of the art.

In order to do this, it is necessary to solve the technical problem of cutting a continuous strip of products packaged in a row to remove those found to be defective during a check along the production line and then to rejoin the continuous strip, all in an automated and reliable way and maintaining the predefined and constant pitch between the packaged products.

In particular, one purpose of the present invention is to provide an apparatus and to perfect a method for cutting and joining a continuous strip of products packaged in a row, which allow the defective ones to be extracted from the strip of products both reliably and quickly.

Another purpose of the present invention is to provide an apparatus and to perfect a method for cutting and joining a continuous strip of products packaged in a row, which allow to maintain a predefined and constant pitch between the products, after the strip has been joined, after a cut.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem disclosed above in a new and original way, also achieving considerable advantages compared to the state of the prior art, an apparatus according to the present invention for cutting and joining a continuous strip of products packaged in a row, wherein the products are distanced according to a predefined pitch and separated by a plurality of separation welds, each of which is present between two adjacent products, and wherein the separation welds are distanced according to the same predefined pitch and are disposed parallel to each other, comprises: a first motorized dragging member configured to make the continuous strip of products advance in a direction of advance substantially perpendicular to the separation welds; sensor means disposed upstream of the first dragging member and configured to detect a defective or faulty section on the continuous strip, while the latter is made to advance by the first dragging member, wherein the defective section comprises one or more defective products; cutting means configured to cut the continuous strip in a direction parallel to the separation welds in order to separate the defective section from the continuous strip, following the detection of the defective section by the sensor means, the cutting means being disposed upstream of the first dragging member with respect to a movement of advance of the continuous strip; the continuous strip thus being separated into two sections, a first section and a second section, respectively on one side with respect to the defective section and on another side with respect to the defective section, with respect to the direction of advance of the continuous strip; a second motorized dragging member configured to move, after the removal of the defective section, the first section and/or the second section, so as to move the second section and the first section reciprocally close until the respective free ends meet in order to restore the predefined pitch, the second dragging member being disposed upstream of the first dragging member and downstream of the sensor means with respect to the movement of advance of the continuous strip; joining means configured to join together the free ends of the first section and of the second section, after the first and second sections have been made to meet, in such a way as to recreate the continuous strip with the products distanced by the predefined pitch; and a control unit connected at least to the sensor means and to the first dragging member and configured to selectively control the latter so that it stops when the joining means carry out the joining of the first section and of the second section, as well as for at least a predefined period of time comprised between when the cutting means make the cut of the defective section and when the second dragging member moves the first section and the second section close to each other.

In accordance with another aspect of the present invention, the second dragging member is provided with at least one slit and the cutting means comprise a knife, which is configured to be inserted in the at least one slit in order to make a first cut or a second cut of the continuous strip, wherein the defective section is located between the first and the second cut.

Preferably, the second motorized dragging member is configured to move the second section in the direction of advance.

Advantageously, the apparatus comprises actuation means configured to move the first dragging member and the second dragging member reciprocally close to or away from each other.

Preferably, the first and second dragging members are disposed so as to be tangent in an exchange zone where the continuous strip passes from the second dragging member to the first dragging member, while the continuous strip is made to advance in the direction of advance.

According to some embodiments, the first dragging member and/or the second dragging member each comprise a member rotating about a respective axis of rotation.

The first dragging member can be provided with first suction means to temporarily retain the continuous strip for a segment in the direction of advance.

Preferably, the second dragging member is provided with second suction means to temporarily retain the first and/or the second section of the continuous strip against a support surface.

Favorably, the first dragging member is provided with a plurality of compartments distanced from each other by the predefined pitch and sized so as to each accommodate one of the products of the continuous strip.

According to one aspect, a method for cutting and joining a continuous strip of products packaged in a row comprises the subsequent steps of preparing a continuous strip of products disposed in a row and distanced according to a predefined pitch and separated by a plurality of separation welds, each of which is present between two adjacent products and wherein the separation welds are distanced according to the same predefined pitch and are disposed parallel to each other; advancing the continuous strip of products in a direction of advance substantially perpendicular to the separation welds, the advancing being carried out by means of a first motorized dragging member; detecting, by means of sensor means disposed upstream of the first dragging member, a defective section on the continuous strip, while the continuous strip is advancing in the step of advancing as above, wherein the defective section comprises one or more defective products; following the detection of the defective section by the sensor means, a cutting step, in which it is provided to make a first and a subsequent second cut respectively, distanced from each other and parallel to the separation welds, by means of cutting means, in order to separate the defective section from the continuous strip, the first and second cuts being made upstream of the first dragging member with respect to a movement of advance of the continuous strip, the continuous strip thus being separated into two sections, a first section and a second section, respectively on one side with respect to the defective section and on another side with respect to the defective section; then a step of approaching, following the removal of the defective section, in which the first section and the second section are moved reciprocally close to each other until the respective free ends meet in order to restore the predefined pitch, the step of approaching being carried out by means of a second motorized dragging member, driven to move the first section and/or the second section, the second dragging member being disposed upstream of the first dragging member with respect to the movement of advance of the continuous strip; then a step of joining the free ends of the first section and of the second section, so as to recreate the continuous strip with the products distance by the predefined pitch, the first dragging member being stopped during the joining step, as well as for at least a predefined period of time comprised between the cutting step and the subsequent step of approaching the first and second section; and finally a step of re-driving the first dragging member in order to make the recreated continuous strip of products advance in the direction of advance.

According to some embodiments, the step of joining the first section and the second section occurs on the first dragging member.

Preferably, the first and/or second cuts made in the cutting step occur on the second dragging member.

Advantageously, a step of removing the defective section is carried out by the second dragging member, by means of a rotation thereof, after the cutting step.

In accordance with some embodiments, after the cutting step and before the step of removing the defective portion, there is provided a step of moving the first and the second dragging members reciprocally away from each other, while they are stopped.

Preferably, after the step of removing the defective section, there is provided a step moving the first dragging member and the second dragging member close to each other again, while they are stopped.

In one variant, the first cut and the second cut are made along respective cutting lines such as to allow a subsequent overlapping of the free ends of the first section and of the second section before the joining step, so as to restore the predefined pitch.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a plan view of a section of a continuous strip of products packaged in a row to be cut and joined;
- figs. from 2 to 9 are schematic lateral views of the apparatus for cutting and joining a continuous strip of products packaged in a row in subsequent steps of the method for cutting and joining a continuous strip of products packaged in a row;
- figs. 4A, 6A and 8A are enlarged views of the detail A of fig. 4, of the detail B of fig. 6 and of the detail C of fig. 8, respectively;
- figs. 10 and 11 are schematic lateral views of the apparatus for cutting and joining a continuous strip of products packaged in a row according to alternative embodiments, in two steps of the method for cutting and joining a continuous strip of products packaged in a row; and
- fig. 11A is an enlarged view of the detail D of fig. 11.

We must clarify that in the present description the phraseology and terminology used, such as for example the terms horizontal, vertical, front, rear, high, low, internal and external, with their declinations, have the sole function of better illustrating the present invention with reference to the attached drawings and must not be in any way used to limit the scope of the invention itself, or the field of protection defined by the attached claims.

Furthermore, the persons of skill in the art will recognize that certain sizes or characteristics in the drawings may have been enlarged, deformed, or shown in an unconventional or non-proportional way in order to provide a version of the present invention that is easier to understand. When sizes and/or values are specified in the following description, the sizes and/or values are provided for illustrative purposes only and must not be construed as limiting the scope of protection of the present invention, unless such sizes and/or values are present in the attached claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

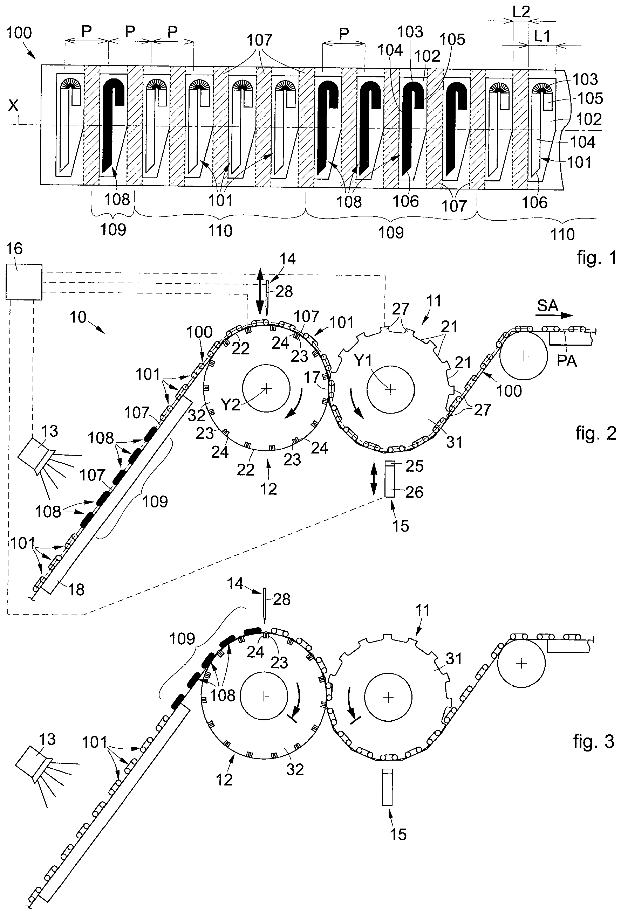

With reference to fig. 1, a continuous strip 100 of products 101 packaged in a row, to be cut and joined by means of an apparatus 10 and a method according to the present invention, comprises a succession of products 101 disposed along a longitudinal axis X of the continuous strip 100, which are distanced according to a predefined pitch p and individually contained in corresponding hermetically sealed compartments 102.

The products 101 are for example straws, each comprising a shaped portion 103, in correspondence with which the straw itself can be folded, which separates a long segment 104 and a short segment 105 of each straw. The free end 106 of the long segment 104 is pointed to facilitate its insertion into an aperture of a beverage container which is hermetically closed by a pierceable film, such as for example in fruit juice packages.

The compartments 102 can be obtained by interposing the products 101 between two sheets of packaging material and welding the two sheets around the products 101. The packaging material used is of the heat-sealable type, for example plastic material such as polyethylene, polypropylene or suchlike. Alternative packaging materials can also be used, for example made of paper or cardboard, which are more environmentally friendly solutions than plastic.

The compartments 102 are separated from each other, along the longitudinal axis X of the continuous strip 100, by a succession of transverse welding segments 107, also called separation welds since they act as separators between two consecutive products 101. These separation welds 107 are perpendicular to the longitudinal axis X of the continuous strip 100 and are all parallel to each other.

The compartments 102 all have the same width L1, taken along the longitudinal axis X of the continuous strip 100, just as the separation welds all have the same width L2, which can be different from or the same as the width L1 of the compartments 102. In the example provided here, the width L1 is greater than the width L2, as shown in fig. 1.

The continuous strip 100 substantially consists of an alternation of compartments 102 and separation welds 107, so that the predefined pitch p is equal to the sum of the width L1 of the compartments 102 and the width L2 of the separation welds 107 (p = L1 + L2).

The continuous strip 100 is intended to be cut, or pre-cut, in correspondence with the separation welds 107 in order to separate the products 101 while keeping them hermetically packaged. Please note that the separation welds 107 are also distanced from each other according to the same predefined pitch p that separates the packaged products 101.

In the example shown, the pitch p is taken between the axis of the long segment 104 of two consecutive straws; however, it can be measured using as reference any point of the straws 101 whatsoever, as long as it is always the same on all the straws 101 or on all the compartments 102.

The continuous strip 100 also includes, among the packaged products 101, some defective products 108 (solid in fig. 1) which define some defective sections 109 of the continuous strip 100. More precisely, each defective section 109 can comprise a single defective product 108 or several consecutive defective products 108, for example four as shown in fig. 1. The defective products 108 are distanced from other defective products 108 or from non-defective products 101 by the same predefined pitch p mentioned above, and these are also straws similar to the straws 101. The difference with the latter is that they have a defect that makes these defective products unsuitable for marketing, such as for example a break, an aperture in one of the segments 104, 105 or in the folded shaped portion 103, or suchlike.

Hereafter in the application, the products 101 are to be considered as suitable for use and they define sections 110 of continuous strip 100 which are not to be discarded, contrary to the defective sections 109.

With reference to figs. from 2 to 9, an apparatus 10 according to the present invention for cutting and joining a continuous strip 100 of products 101 packaged in a row comprises a first motorized dragging member 11 configured to make the continuous strip 100 advance along a path of advance PA oriented according to a direction of advance SA parallel to the plane of the sheet in figs. from 2 to 9, a second motorized dragging member 12, a sensor 13 configured to detect defective products, cutting means 14 configured to cut the continuous strip 100, and joining means 15 configured to join two separate strip sections 110 so as to reconstitute the continuous strip 100 after having eliminated the defective sections 109 from it.

We must clarify that the continuous strip 100 is oriented in such a way as to have its own longitudinal axis X aligned with the path of advance PA. In this way, the separation welds 107 are transverse, in particular perpendicular, with respect to the path of advance PA.

The second dragging member 12 is disposed upstream of the first dragging member 11 with respect to the path of advance PA. The sensor 13 and the cutting means 14 are operatively associated with the second dragging member 12, while the joining means 15 are disposed in proximity to the first dragging member 11 in order to interact with the latter.

The apparatus 10 also comprises a control unit 16 connected to the first dragging member 11 and configured to command its drive and stop. Advantageously, the control unit 16 is also connected to the second dragging member 12, to the sensor 13, to the cutting means 14 and to the joining means 15 so as to command them all in a coordinated and synchronized way.

The first dragging member 11 and the second dragging member 12 are configured as dragging wheels 31, 32, each one rotatable about an axis of rotation Y1, Y2 of their own, such axes of rotation Y1, Y2 being parallel to each other and perpendicular to the direction of advance of the continuous strip 100, indicated by the arrow SA in the drawings.

The first dragging wheel 31 is provided with a plurality of compartments 21 distributed along its circumference in such a way as to be distanced by the same pitch p with respect to the packaged products 101. The compartments 21 are suitably sized so as to each accommodate one respective wrapped product 101 of the continuous strip 100. The first dragging wheel 31 is also equipped with an internal suction system (not shown in the drawings) to temporarily retain a segment of the continuous strip 100 along the path of advance PA, so as to keep the strip adhering to the dragging wheel 31.

The second dragging wheel 32 instead has a substantially smooth external surface so as to define a support surface 22 for a segment of the continuous strip 100, and it is provided with a plurality of slits 23, 24 disposed in pairs distanced from each other according to the same pitch p mentioned above. In particular, each pair of slits 23, 24 comprises a first slit 23 and a second slit 24 located in proximity to the first slit 23 and upstream of it with respect to the direction of advance SA (fig. 2).

The slits 23, 24 are oriented parallel to each other and perpendicular to the direction of advance SA, and they develop in depth radially with respect to the second dragging wheel 32. The latter is configured so that when the products 101 and/or the defective products 108 are resting on the support surface 22, the slits 23, 24 are placed between two consecutive products (whether these are defective or not), that is, in correspondence with a separation weld 107.

The second dragging wheel 32 is also equipped with its own internal suction system (not shown in the drawings) to temporarily retain a segment of continuous strip 11 against the support surface 22, as will be better explained below.

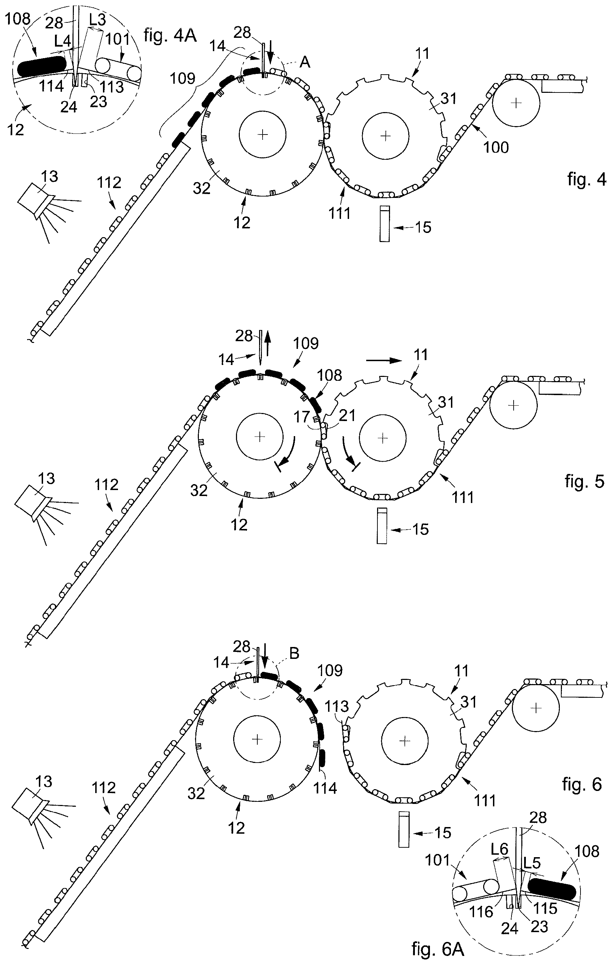

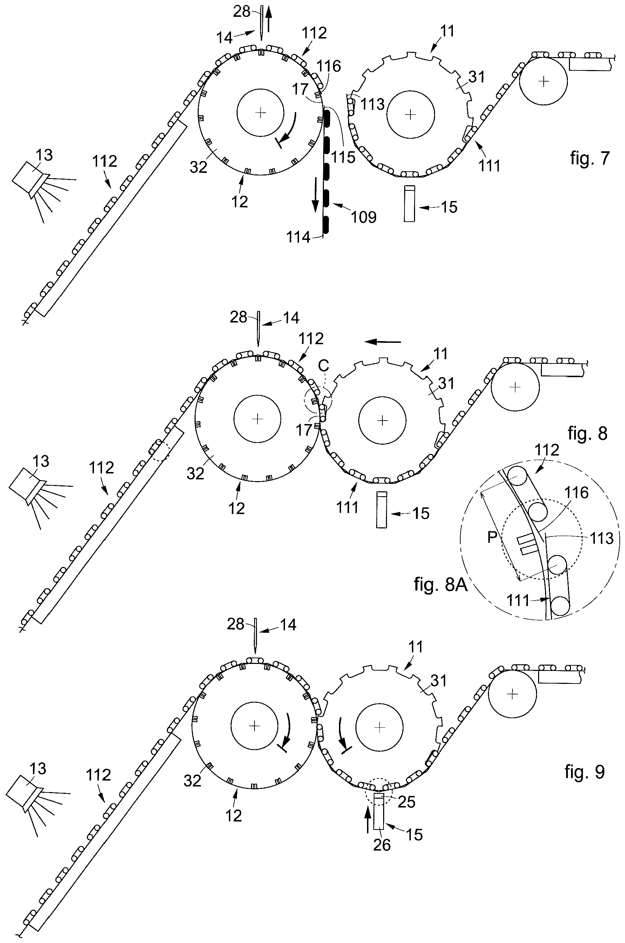

The first dragging wheel 31, in addition to being rotatable about its own axis of rotation Y1, is also mobile away from and toward the second dragging wheel 32, between a close configuration, in which the first and second dragging wheels 31, 32 are substantially in reciprocal contact and allow the advance of the continuous strip along the path of advance PA (figs. 2 to 5, 8 and 9), and a distanced configuration, in which the first and second dragging wheels 31, 32 are distanced from each other, preventing the advance of the continuous strip 100 along the path of advance PA (figs. 6 and 7).

In particular, in the close configuration, the first and second dragging wheels 31, 32 are in reciprocal contact, that is, they are tangent in an exchange zone 17 where the packaged products 101 are transferred from the second dragging wheel 32 to the first dragging wheel 31. They are synchronized so that, in correspondence with the exchange zone 17, the compartments 21 of the first dragging wheel 31 are placed between two pairs of slits 23, 24 of the second dragging wheel 32, so as to automatically achieve the insertion of a product 101 in a corresponding compartment 21 (fig. 2).

The displacement of the first dragging wheel 31 between the close configuration and the distanced configuration is commanded by suitable actuation means, of the type known in the state of the art and not described here in detail, which are commanded by the control unit 16.

The cutting means 14 are placed above the second dragging wheel 32, the cutting means 14 comprising a knife 28 oriented perpendicularly to the direction of advance SA so as to cut the continuous strip 100 in a direction perpendicular with respect to its longitudinal axis X. The knife 28 is also oriented radially with respect to the second dragging wheel 32 and is mobile in this same direction, so as to be able to enter the slits 23, 24 present on the support surface 22 (figs. 4, 4A, 6 and 6A) when one or the other of such slits is aligned with the knife 28. Obviously, the edge of the knife 28 is oriented toward the second dragging wheel 32 so as to be able to cut the continuous strip 100 resting on the support surface 22.

Upstream of the second dragging wheel 32 there is disposed a sensor 13, in particular of the optical sensor type, for example a video camera or suchlike, oriented toward the path of advance PA. Advantageously, in correspondence with the zone monitored by the sensor 13 there is a support 18 equipped with a sliding surface 19 on which the continuous strip 100 is made to slide, and which therefore defines a segment of the path of advance PA. The sensor 13 is preferably oriented orthogonally to the sliding surface 19, more precisely orthogonally to the path of advance PA, so as to have the best view of the products 101 and of the defective products 108 that transit there, and thus better identify the defective products 108.

The joining means 15 are instead placed in correspondence with the first dragging wheel 31, in particular below it, so as to be able to act on the continuous strip 100. The joining means 15 comprise a joining head 25 mounted on a body 26 and oriented radially with respect to the first dragging wheel 31.

The joining means 15 are also radially mobile with respect to the first dragging wheel 31 between a position of contact with the first dragging wheel 31, in which the joining head 15 presses against a segment of the continuous strip 100 located above a segment of external surface 27 of the first dragging wheel 31 disposed between two compartments 21 so as to perform the joining of two strip sections, as will be explained in detail below, and a distanced position in which the joining head 25 and the corresponding body 26 are distanced from the first dragging wheel 31 and allow it to rotate freely, thus making the continuous strip 100 advance along the path of advance PA.

In the embodiment of figs. from 2 to 9, the joining head 25 is a welding head, configured to weld two strip sections. Consequently, the continuous strip 100 has to be made of a heat-sealable material, for example plastic, polyethylene, polypropylene or suchlike.

Alternatively, the joining head 25 is an adhesive tape applicator, configured to apply at least one segment of adhesive tape across two strip sections. In this embodiment, it is not necessary for the continuous strip 100 to be made of a heat-sealable material.

The apparatus 10 described heretofore allows to perform a method for cutting and joining a continuous strip 100 of products 101 packaged in a row as follows. For the sake of simplicity of the drawings, and with the aim of clarifying the representation of the following steps of the method, the control unit is not shown in figs. 3 to 9, but it is always present in the apparatus 10 in order to control the first and second dragging wheels 31, 32, the sensor 13, the knife 28 and the joining means 15.

Fig. 2 shows an initial step of the method, in which the sensor 13 detects the presence of a defective section 109 in the continuous strip 100 of products 101 packaged in a row. Specifically, the defective section 109 comprises five consecutive defective products 108 in the continuous strip 100.

In this step, the continuous strip 100 is made to advance continuously by means of the first dragging wheel 31, on the command of the control unit 16. In particular, the internal suction system of the first dragging wheel 31 is active, so as to be able to drag the continuous strip 100.

The second dragging wheel 32 is also set in rotation by the control unit 16 so as to remain synchronized with the advance of the continuous strip 100 and with the first dragging wheel 31, so that the packaged products (defective or not) are always placed between two successive pairs of slits 23, 24, which in turn have to always be in correspondence with the segments of external surface 27 of the first dragging wheel 31. The internal suction system of the second dragging wheel 32 is off.

After the detection of the defective section 109 by the sensor 13, the control unit 16 commands the first dragging wheel 31 so as to stop the advance of the continuous strip 100 when the separation weld 107 located between the last non-defective product 101 and the first defective product 108 is placed below the knife 28 (fig. 3). More precisely, the advance of the continuous strip 100 is stopped when the knife 28 is aligned, in a direction that is radial with respect to the second dragging wheel 32, with the second slit 24 of the pair that is located below the separation weld 107 indicated above.

Subsequently, the knife 28 is driven to perform a first cut in the separation weld 107 described above (fig. 4). For this purpose, the knife 28 is displaced in the direction that is radial to the second dragging wheel 32, until its edge enters the second slit 24 of the pair that is below the separation weld 107 (fig. 4A).

The continuous strip 100 is then separated into a first section 111, downstream of the separation weld 107 that has been cut with respect to the path of advance PA, and the defective section 109 still joined to a second section 112 that is upstream with respect to the path of advance PA. The positioning of the blade, which is not centered with respect to the width L2 of the separation weld 107, causes the latter to separate into a first flap 113, with a width L3, at the tail end of the first section 111, and into a second flap 114 at the head end of the defective section 109 with respect to the path of advance PA and which has a width L4 smaller than the width L3 of the first flap 113 (fig. 4A). It can be deduced that the width L3 of the first flap 113 is larger than half the width L2 of the separation weld 107 (L3>L2/2).

During the cutting step, the first and second dragging wheels 31, 32 are both stationary.

After the first cut has been performed and the knife 28 has been returned to the raised position, the control unit 16 commands the advance of the first section 111 of continuous strip 100 and, at the same time, of the defective section 109.

In order to do this, both the first dragging wheel 31 as well as the second dragging wheel 32 are driven in rotation with both the internal suction systems in operation. In this way, the first dragging wheel 31 makes the first section 111 advance, downstream of the first cut with respect to the path of advance PA, and the second dragging wheel 32 makes the defective section 109 and the second section 112 still joined to it advance.

The advance of the first section 111, of the defective section 109 and of the second section 112 is stopped again when the last wrapped product 101 of the first section 111 arrives at the exchange zone 17 and is inserted into a compartment 21 of the first dragging wheel 31 (fig. 5). At this point, the control unit 16 commands the displacement of the first dragging wheel 31, and with it of the first section 111 of the continuous strip 100, toward the distanced configuration shown in fig. 6. The first dragging wheel 31 is kept stationary, that is, it is not made to rotate, but its internal suction system is always active so as to keep the first section 111 engaged in the first dragging wheel 31.

The second dragging wheel 32 is then driven in rotation so as to make the defective section 109 advance further, until the separation weld 107 between the defective section 109 and the second section 112 arrives below the knife 28, more precisely when the knife 28 is aligned, in a radial direction with respect to the second dragging wheel 32, with the first slit 23 of the pair of slits 23, 24 located below the separation weld 107.

The knife 28 is then commanded so that it is displaced toward the second dragging wheel 32, so as to perform a second cut of the continuous strip 100 in correspondence with the separation weld 107 (figs. 6 and 6A).

In particular, the edge of the knife 28 enters the first slit 23, which determines a non-centered position of the second cut with respect to the last defective product 108 of the defective section 109 and the first product 101 of the second section 112 (fig. 6A). The separation weld 107 is separated into a third flap 115 with a width L5 at the tail end of the defective section 109 with respect to the path of advance PA, and into a fourth flap 116 with a width L6 at the head end of the second section 112 with respect to the path of advance PA. The width L6 of the fourth flap 116 is greater than the width L5 of the third flap 115 (L6> L5), and it is also greater than half the width L2 of the separation weld 107 that has just been cut (L6> L2/2).

The defective section 109 is therefore separated from the rest of the initial continuous strip 100. The knife 28 is raised to its initial position and the second dragging wheel 32 is driven to make both the defective section 109 and also the second section 112 of the continuous strip 100 advance. The rotation of the second dragging wheel 32 is stopped when the last defective product 108 of the defective section arrives at the exchange zone 17 (fig. 7).

Since the first dragging wheel 31 is in the configuration in which it is distanced from the second dragging wheel 32 (and always stationary), the defective section 109 is left to fall and is thus discarded. The second dragging wheel 32 also defines means for removing the defective section 109.

In an alternative variant, a third dragging wheel is provided interposed between the first and second dragging wheels 31, 32 and which allows to discard the defective section 109 without displacing the first dragging wheel 31. The third wheel defines means for removing the defective section 109.

Once the defective section 109 has been discarded, the first dragging wheel 31 is displaced to its configuration in which it is close to the second dragging wheel 32 (fig. 8). In doing so, the first section 111 and the second section 112 are joined again, the last product 101 of the first section 111 being in the exchange zone 17 while the first product 101 of the second section 112 is immediately downstream of the exchange zone 17, and distant by the same predefined pitch p with respect to the other products 101 packaged in a row.

It is also possible to observe that both the first flap 113, at the tail end of the first section 111 with respect to the path of advance PA, and also the fourth flap 116, at the head end of the second section 112 with respect to the path of advance PA, are placed between the two products 101 described above; both such flaps 113, 116 having a width L3, L6 greater than half the width L2 of the separation weld 107 which should separate these two products 101.

This allows to make the flaps 113, 116 overlap each other (fig. 8A), each one defining a respective free end of the first and of the second section 111, 112, respectively, allowing to join the flaps 113, 116 by welding, while maintaining the predefined pitch p between the two products 101.

Subsequently, the first and second dragging wheels 31, 32 are both driven in rotation in order to make the first section 111 and the second section 112, which are not joined together, advance together, in such a way as to maintain the pitch p between the last product 101 of the first section 111 and the first product 101 of the second section 112, with respect to the path of advance PA. Maintaining the pitch p between these two products means also maintaining the extremal portions of the first and fourth flaps 113, 116 overlapping.

The advance of the first section 111 and of the second section 112 is stopped when the first flap 113 and the fourth flap 116 arrive in correspondence with the joining means 15.

The joining means 15 are then driven so as to press on the first flap 113 and on the fourth flap 116 in order to weld them reciprocally, thus joining together the first section 111 and the second section 112, and restoring the continuous strip 100 of products 101 packaged in a row.

The step of joining the first section 111 and the second section 112, performed stepwise, after the removal of the defective section 109 can be performed by welding thanks to the first and second cut made in two different positions because of the two slits 23, 24 provided in correspondence with the separation welds 107. In fact, the first cut is provided in correspondence with the second slit 24 while the second cut is provided in correspondence with the first slit 23. This determines the creation of two flaps 113, 116, both with a width greater than half with respect to the separation welds 107, allowing to overlap an extremal portion thereof which can then be welded together.

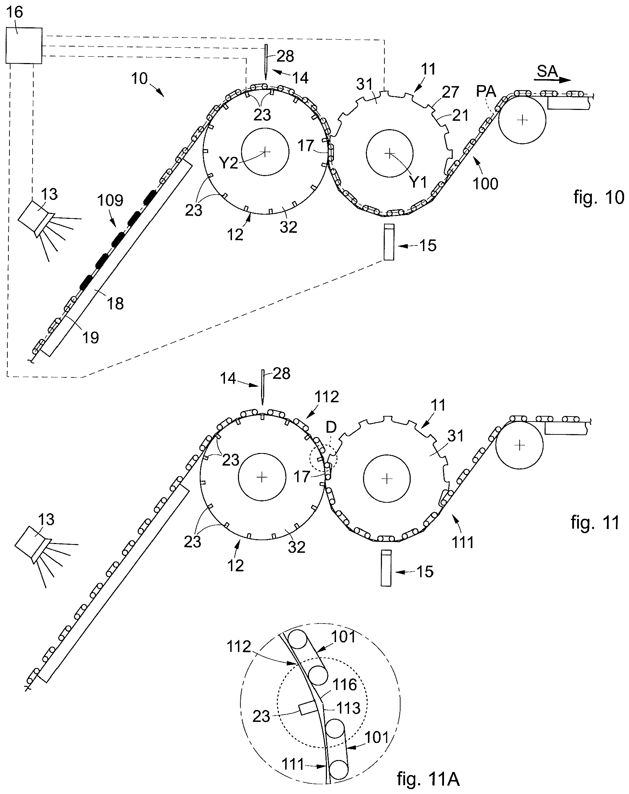

With reference to figs. 10, 11 and 11A, an apparatus 10 in accordance with a second embodiment differs from the apparatus described above in that the second dragging wheel 32 is equipped with a plurality of single slits 23, and because of the type of joining means 15 provided.

The presence of a single slit between two successive products in the continuous strip 100 causes the first cut and the second cut made by the knife 28 to always be in the same position between two successive products. In this way, the first flap 113 and the fourth flap 116 will have respective widths L3, L6 which when added together will result in the width L2 of the separation welds 107.

In the step in which the first dragging wheel 31 is brought close to the second dragging wheel 32 (fig. 11), the first flap 113 and the fourth flap 116 do not have respective end portions which overlap, but they are placed adjacent, one following the other, maintaining the predefined pitch p between the last product 101 of the first section 111 and the first product 101 of the second section 112, with respect to the path of advance PA (fig. 11A).

The reciprocal joining of these two flaps can be performed by means of alternative joining means, compared to welding or application of adhesive tape, for example by gluing.

The method described heretofore applied to continuous strips 100 made of non-heat-sealable material, for example paper, cardboard or suchlike, can also be carried out by means of the apparatus 10 described in the first embodiment, that is, in which the second dragging wheel 32 comprises a plurality of pairs of slits 23, 24.

With this type of material, it can be provided to always make the first and second cut in the same position between two consecutive products, for example by providing to always insert the knife 28 in the same slit between the first slit 23 and the second slit 24. The result achieved will be similar to that obtained with the apparatus 10 of the second embodiment.

Obviously, the joining means 15 have to be able to apply glue or an adhesive tape, or perform other types of joining that are compatible with paper or cardboard type material, or suchlike.

In the embodiments described above, the first dragging wheel 31 and the second dragging wheel 32 are each provided with a respective motor (not shown in the drawings), the two motors being synchronized by means of the control unit 16. Alternatively, there can be provided a single motor which drives only one of the dragging wheels 11, 12, connecting the latter by means of a gear so that, in the close configuration, the movement of the motorized dragging wheel is transmitted to the other dragging wheel, while in the distanced configuration the nonmotorized dragging wheel remains stationary until it returns to the close configuration. It is preferable to provide that the motorized dragging wheel is the second dragging wheel 32, because it is provided that this is driven in rotation even while the dragging wheels are in the distanced configuration, while the first dragging wheel 31 remains stationary.

In other embodiments, not shown, the cutting means 14 can comprise one or more suitable cutting members, configured to be moved automatically in order to selectively cut the strip of material.

In an alternative embodiment, the knife 28 is disposed upstream of the second dragging member 12 and the latter, after the cut made by the knife 28, moves the first section 111 toward the second section 112 until the flaps 113, 116 meet.

It is clear that modifications and/or additions of parts or steps may be made to the method and to the apparatus as described heretofore, without departing from the field and scope of the present invention, as defined by the claims.

It is also clear that, although the present invention has been described with reference to some specific examples, a person of skill in the art shall certainly be able to achieve many other equivalent forms of packaging methods and plants, having the characteristics as set forth in the claims and hence all coming within the field of protection defined thereby.

In the following claims, the sole purpose of the references in brackets is to facilitate reading and they must not be considered as restrictive factors with regard to the field of protection defined by the same claims.

## Claims

1. Apparatus (10) for cutting and joining a continuous strip (100) of products (101) packaged in a row, wherein said products (101) are distanced according to a predefined pitch (p) and separated by a plurality of separation welds (107), each of which is present between two of said adjacent products (101), and wherein said separation welds (107) are distanced according to said predefined pitch (p) and are disposed parallel to each other, said apparatus (10) comprising a first motorized dragging member (11) configured to make said continuous strip (100) of products (101) advance in a direction of advance (SA) substantially perpendicular to said separation welds (107); sensor means (13) disposed upstream of said first dragging member (11) and configured to detect a defective section (109) on said continuous strip (100), while the latter is made to advance by said first dragging member (11), wherein said defective section (109) comprises one or more defective products (108); cutting means (14) configured to cut said continuous strip (100) in a direction parallel to said separation welds (107) in order to separate said defective section (109) from said continuous strip (100), following the detection by said sensor means (13) of said defective section (109), said cutting means (14) being disposed upstream of said first dragging member (11) with respect to a movement of advance of the continuous strip (100); said continuous strip (100) thus being separated into two sections (111, 112), a first section (111) and a second section (112), respectively on one side with respect to said defective section (109) and on another side with respect to said defective section (109); said apparatus (10) being **characterized in that** it also comprises a second motorized dragging member (12) configured to move, after removal of the defective section (109), said first section (111) and/or said second section (112), so as to move said said first section (111) and second section (112) reciprocally close until the respective free ends (113, 116) meet in order to restore said predefined pitch (p), said second dragging member (12) being disposed upstream of said first dragging member (11) and downstream of said sensor means (13) with respect to the movement of advance of the continuous strip (100); joining means (15) configured to join together the free ends (13, 116) of said first section (111) and of said second section (112), after the first and second sections have been made to meet, in such a way as to recreate said continuous strip (100) with the products (101) distanced by said predefined pitch (p); and a control unit (16) connected at least to said sensor means and to said first dragging member (11) and configured to selectively control the latter so that it stops when said joining means carry out the joining of said first section (111) and of said second section (112), as well as for at least a predefined period of time comprised between when said cutting means (14) make the cut of said defective section (109) and when said second dragging member (12) moves the first section and the second section close to each other.

2. Apparatus (10) as in claim 1, **characterized in that** the second dragging member (12) is provided with at least one slit (23, 24) and said cutting means (14) comprise a knife (28) configured to be inserted into said at least one slit (23, 24) in order to make a first cut or a second cut of said continuous strip (100), said defective section (109) being between said first and second cut.

3. Apparatus (10) as in claim 1 or 2, **characterized in that** said second motorized dragging member (12) is configured to move said second section (112) along said direction of advance (SA).

4. Apparatus (10) as in any claim from 1 to 3, **characterized in that** it comprises actuation means configured to move said first dragging member (11) and said second dragging member (12) reciprocally close to or away from each other.

5. Apparatus (10) as in any claim from 1 to 4, **characterized in that** said first and second dragging members (11, 12) are disposed so as to be tangent in an exchange zone (17) where said continuous strip (100) passes from said second dragging member (12) to said first dragging member (11), while said continuous strip (100) is made to advance in said direction of advance (SA).

6. Apparatus (10) as in any claim from 1 to 5, **characterized in that** said first dragging member (11) and/or said second dragging member (12) each comprise a member rotating about a respective axis of rotation (Y1, Y2).

7. Apparatus (10) as in any claim from 1 to 6, **characterized in that** said first dragging member (11) is provided with first suction means to temporarily retain said continuous strip (100) for a segment in said direction of advance (SA).

8. Apparatus (10) as in any claim from 1 to 7, **characterized in that** said second dragging member (12) is provided with second suction means to temporarily retain said first section (111) and/or said second section (112) of said continuous strip (100) against a support surface (22).

9. Apparatus (10) as in any claim from 1 to 8, **characterized in that** said first dragging member (11) is provided with a plurality of compartments (21) distanced from each other by said predefined pitch (p) and sized so as to each accommodate one of said products (101) of said continuous strip (100).

10. Method for cutting and joining a continuous strip (100) of products (101) packaged in a row, comprising, in succession, a step of preparing a continuous strip (100) of products (101) disposed in a row and distanced according to a predefined pitch (p) and separated by a plurality of separation welds (107), each of which is present between two adjacent products (101), wherein the separation welds (107) are distanced according to said predefined pitch (p) and are disposed parallel to each other; a step of advancing said continuous strip (100) of products (101) in a direction of advance (SA) substantially perpendicular to said separation welds (107), said step of advancing being carried out by means of a first motorized dragging member (11); a step of detecting, by means of sensor means (13) disposed upstream of said first dragging member (11), a defective section (109) on said continuous strip (100), while the latter is advancing in said step of advancing, wherein said defective section (109) comprises one or more defective products (108); following the detection of said defective section (109) by said sensor means (13), a cutting step, in which it is provided to make a first and a second cut respectively, distanced from each other and parallel to said separation welds (107), by means of cutting means (14), in order to separate said defective section (109) from said continuous strip (100), said first and second cuts being made upstream of said first dragging member (11) with respect to a movement of advance of the continuous strip (100), the latter thus being separated into two sections (111, 112), a first section (111) and a second section (112), respectively on one side with respect to said defective section (109) and on another side with respect to said defective section (109); **characterized in that** it comprises a step of approaching, following the removal of the defective section (109), in which said first section (111) and said second section (112) are moved reciprocally close to each other until the respective free ends (113, 116) meet in order to restore said predefined pitch (p), said step of approaching being carried out by means of a second motorized dragging member (12), driven to move said first section (111) and/or said second section (112), said second dragging member (12) being disposed upstream of said first dragging member (11) with respect to the movement of advance of the continuous strip (100); a step of joining said free ends (113, 116) of said first section (111) and of said second section (112) to each other, so as to recreate said continuous strip (100) with the products (101) distance by said predefined pitch (p), said first dragging member (11) being stopped during the joining step, as well as for at least a predefined period of time comprised between the cutting step and the subsequent step of approaching said first and second section, and finally a step of re-driving said first dragging member (11) in order to make the recreated continuous strip (100) of products (101) advance in the direction of advance (SA).

11. Method as in claim 10, **characterized in that** said step of joining the first section and the second section occur on said first dragging member (11).

12. Method as in one of claims 10 or 11, **characterized in that** said first and/or said second cut made in the cutting step occur on said second dragging member (12).

13. Method as in any claim from 10 to 12, **characterized in that** a step of removing said defective section (109) is carried out by said second dragging member (12), by means of a rotation thereof, after said cutting step.

14. Method as in claim 13, **characterized in that** after the first cutting step and before the step of removing the defective section (109), there is provided a step of moving said first dragging member (11) and second dragging member (12) reciprocally away from each other, while they are stopped.

15. Method as in claim 14, **characterized in that** after the step of removing said defective section, there is provided a step of moving said first dragging member (11) and said second dragging member (12) close to each other again, while they are stopped.

16. Method as in any claim from 10 to 15, **characterized in that** the first cut and the second cut are made along respective cutting lines such as to allow a subsequent overlapping of said free ends (113, 116) of said first section (111) and of said second section (112) before the joining step, so as to restore said predefined pitch (p).

## Patentansprüche

1. Vorrichtung (10) zum Schneiden und Verbinden eines kontinuierlichen Streifens (100) von in einer Reihe verpackten Produkten (101), wobei die Produkte (101) gemäß einer vordefinierten Teilung (p) voneinander im Abstand angeordnet sind und durch eine Mehrzahl von Trennschweißnähten (107), von denen jede zwischen zwei der benachbarten Produkte (101) vorhanden ist, getrennt sind, und wobei die Trennschweißnähte (107) gemäß der vordefinierten Teilung (p) voneinander im Abstand angeordnet sind und parallel zueinander angeordnet sind, wobei die Vorrichtung (10) aufweist ein erstes motorisiertes Mitnehmerelement (11), welches dazu eingerichtet ist, den kontinuierlichen Streifen (100) von Produkten (101) in einer Vorschubrichtung (SA) fortzubewegen, welche im Wesentlichen senkrecht zu den Trennschweißnähten (107) ist, ein Sensormittel (13), welches stromaufwärts des ersten Mitnehmerelements (11) angeordnet sind und dazu eingerichtet ist, einen fehlerhaften Abschnitt (109) auf dem kontinuierlichen Streife fortzubewegen n (100) zu erfassen, während letzterer durch das erste Mitnehmerelement (11) fortbewegt wird, wobei der fehlerhafte Abschnitt (109) ein oder mehrere fehlerhafte Produkte (108) aufweist, Schneidmittel (14), welche dazu eingerichtet sind, den kontinuierlichen Streifen (100) in einer Richtung parallel zu den Trennschweißnähten (107) zu schneiden, um den fehlerhaften Abschnitt (109) von dem kontinuierlichen Streifen (100) zu trennen, nach dem Erfassen des fehlerhaften Abschnitts (109) durch das Sensormittel (13), wobei die Schneidmittel (14) stromaufwärts des ersten Mitnehmerelements (11) bezogen auf eine Vorschubbewegung des kontinuierlichen Streifens (100) angeordnet sind, wobei der kontinuierliche Streifen (100) somit in zwei Abschnitte (111, 112), einen ersten Abschnitt (111) und einen zweiten Abschnitt (112), jeweils auf einer Seite bezogen auf den fehlerhaften Abschnitt (109) und auf einer anderen Seite bezogen auf den fehlerhaften Abschnitt (109) getrennt wird, wobei die Vorrichtung (10) **dadurch gekennzeichnet ist, dass** sie auch aufweist ein zweites motorisiertes Mitnehmerelement (12), welches dazu eingerichtet ist, nach dem Entfernen des defekten Abschnitts (109) den ersten Abschnitt (111) und/oder den zweiten Abschnitt (112) zu bewegen, um den ersten Abschnitt (111) und den zweiten Abschnitt (112) reziprok zu bewegen, bis die jeweiligen freien Enden (113, 116) zusammentreffen, um die vordefinierte Teilung (p) wiederherzustellen, wobei das zweite Mitnehmerelement (12) stromaufwärts des ersten Mitnehmerelements (11) und stromabwärts des Sensormittels (13) bezogen auf die Vorschubbewegung des kontinuierlichen Streifens (100) angeordnet ist, Verbindungsmittel (15), welche dazu eingerichtet sind, die freien Enden (13, 116) des ersten Abschnitts (111) und des zweiten Abschnitts (112), nachdem der erste und der zweite Abschnitt zum Zusammentreffen gebracht worden sind, miteinander derart zu verbinden, dass der kontinuierliche Streifen (100) mit den um die vordefinierte Teilung (p) beabstandeten Produkten (101) wiederhergestellt wird, und eine Steuereinheit (16), welche zumindest mit dem Sensormittel und dem ersten Mitnehmerelement (11) verbunden ist und dazu eingerichtet ist, letzteren selektiv so zu steuern, dass er stoppt, wenn die Verbindungsmittel das Verbinden des ersten Abschnitts (111) und des zweiten Abschnitts (112) ausführen sowie für zumindest eine vordefinierte Zeitspanne, welche zwischen dem Ausführen des Schnitts des fehlerhaften Abschnitts (109) durch die Schneidmittel (14) und dem Bewegen des ersten Abschnitts und des zweiten Abschnitts nahe zueinander durch das zweite Mitnehmerelement (12) liegt.

2. Vorrichtung (10) nach Anspruch 1, **dadurch gekennzeichnet, dass** das zweite Mitnehmerelement (12) mit mindestens einem Schlitz (23, 24) versehen ist und die Schneidmittel (14) ein Messer (28) aufweisen, welches dazu eingerichtet ist, in den mindestens einen Schlitz (23, 24) eingeführt zu werden, um einen ersten Schnitt oder einen zweiten Schnitt des kontinuierlichen Streifens (100) auszuführen, wobei der fehlerhafte Abschnitt (109) zwischen dem ersten und dem zweiten Schnitt liegt.

3. Vorrichtung (10) nach Anspruch 1 oder 2, **dadurch gekennzeichnet, dass** das zweite motorisierte Mitnehmerelement (12) dazu eingerichtet ist, den zweiten Abschnitt (112) entlang der Vorschubrichtung (SA) zu bewegen.

4. Vorrichtung (10) nach einem der Ansprüche 1 bis 3, **dadurch gekennzeichnet, dass** sie Betätigungsmittel aufweist, welche dazu eingerichtet sind, das erste Mitnehmerelement (11) und das zweite Mitnehmerelement (12) reziprok nahe zueinander oder voneinander weg zu bewegen.

5. Vorrichtung (10) nach einem der Ansprüche 1 bis 4, **dadurch gekennzeichnet, dass** das erste und das zweite Mitnehmerelement (11, 12) so angeordnet sind, dass sie sich in einer Austauschzone (17) tangieren, in welcher der kontinuierliche Streifen (100) von dem zweiten Mitnehmerelement (12) zu dem ersten Mitnehmerelement (11) läuft, während der kontinuierliche Streifen (100) in der Vorschubrichtung (SA) fortbewegt wird.

6. Vorrichtung (10) nach einem der Ansprüche 1 bis 5, **dadurch gekennzeichnet, dass** das erste Mitnehmerelement (11) und/oder das zweite Mitnehmerelement (12) jeweils ein um eine entsprechende Drehachse (Y1, Y2) rotierendes Element aufweisen.

7. Vorrichtung (10) nach einem der Ansprüche 1 bis 6, **dadurch gekennzeichnet, dass** das erste Mitnehmerelement (11) mit ersten Saugmitteln versehen ist, um den kontinuierlichen Streifen (100) für ein Segment in der Vorschubrichtung (SA) vorübergehend festzuhalten.

8. Vorrichtung (10) nach einem der Ansprüche 1 bis 7, **dadurch gekennzeichnet, dass** das zweite Mitnehmerelement (12) mit zweiten Saugmitteln versehen ist, um den ersten Abschnitt (111) und/oder den zweiten Abschnitt (112) des kontinuierlichen Streifens (100) vorübergehend gegen eine Stützfläche (22) zu halten.

9. Vorrichtung (10) nach einem der Ansprüche 1 bis 8, **dadurch gekennzeichnet, dass** das erste Mitnehmerelement (11) mit einer Mehrzahl von Fächern (21) versehen ist, welche voneinander durch die vordefinierte Teilung (p) im Abstand angeordnet sind und so bemessen sind, dass sie jeweils eines der Produkte (101) des kontinuierlichen Streifens (100) aufnehmen.

10. Verfahren zum Schneiden und Verbinden eines kontinuierlichen Streifens (100) von in einer Reihe verpackten Produkten (101), das nacheinander aufweist einen Schritt des Herstellens eines kontinuierlichen Streifens (100) von in einer Reihe angeordneten Produkten (101), welche gemäß einer vordefinierten Teilung (p) im Abstand angeordnet sind und durch eine Mehrzahl von Trennschweißnähten (107), von denen jede zwischen zwei benachbarten Produkten (101) vorhanden ist, getrennt sind, wobei die Trennschweißnähte (107) gemäß der vordefinierten Teilung (p) im Abstand angeordnet sind und parallel zueinander angeordnet sind, einen Schritt des Fortbewegens des kontinuierlichen Streifens (100) von Produkten (101) in einer Vorschubrichtung (SA), welche im Wesentlichen senkrecht zu den Trennschweißnähten (107) ist, wobei der Schritt des Fortbewegens mittels eines ersten motorisierten Mitnehmerelements (11) ausgeführt wird, einen Schritt des Erfassens, mittels eines stromaufwärts des ersten Mitnehmerelements (11) angeordneten Sensormittels (13), eines fehlerhaften Abschnitts (109) auf dem kontinuierlichen Streifen (100), während dieser in dem Schritt des Fortbewegens fortbewegt wird, wobei der fehlerhafte Abschnitt (109) ein oder mehrere fehlerhafte Produkte (108) aufweist, nach der Erkennung des fehlerhaften Abschnitts (109) durch das Sensormittel (13) einen Schneideschritt, in welchem vorgesehen ist, jeweils einen ersten und einen zweiten Schnitt, welche voneinander beabstandet und parallel zu den Trennschweißnähten (107) verlaufen, mit Hilfe von Schneidmitteln (14) auszuführen, um den fehlerhaften Abschnitt (109) von dem kontinuierlichen Streifen (100) zu trennen, wobei der erste und der zweite Schnitt stromaufwärts des ersten Mitnehmerelements (11) bezogen auf eine Vorschubbewegung des kontinuierlichen Streifens (100) durchgeführt werden, wobei dieser somit in zwei Abschnitte (111, 112), einen ersten Abschnitt (111) und einen zweiten Abschnitt (112), jeweils auf einer Seite bezogen auf den fehlerhaften Abschnitt (109) und auf einer anderen Seite bezogen auf den fehlerhaften Abschnitt (109) getrennt wird, **dadurch gekennzeichnet, dass** es aufweist einen Schritt der Annäherung nach der Entfernung des defekten Abschnitts (109), bei welchem der erste Abschnitt (111) und der zweite Abschnitt (112) reziprok nahe zueinander bewegt werden, bis sich die jeweiligen freien Enden (113, 116) treffen, um die vordefinierte Teilung (p) wiederherzustellen, wobei der Schritt der Annäherung mittels eines zweiten motorisierten Mitnehmerelements (12) ausgeführt wird, das betrieben wird, um den ersten Abschnitt (111) und/oder den zweiten Abschnitt (112) zu bewegen, wobei das zweite Mitnehmerelement (12) stromaufwärts des ersten Mitnehmerelements (11) bezogen auf die Vorschubbewegung des kontinuierlichen Streifens (100) angeordnet ist, einen Schritt des Verbindens der freien Enden (113, 116) des ersten Abschnitts (111) und des zweiten Abschnitts (112) miteinander, um den kontinuierlichen Streifen (100) mit den um die vordefinierte Teilung (p) im Abstand angeordneten Produkten (101) wiederherzustellen, wobei das erste Mitnehmerelement (11) während des Verbindungsschritts sowie für zumindest eine vordefinierte Zeitspanne, welche zwischen dem Schneideschritt und dem darauffolgenden Schritt der Annäherung des ersten und des zweiten Abschnitts liegt, gestoppt wird, und schließlich einen Schritt des erneuten Betreibens des ersten Mitnehmerelements (11), um den wiederhergestellte kontinuierlichen Streifen (100) von Produkten (101) sich in der Vorschubrichtung (SA) fortbewegen zu lassen.

11. Verfahren nach Anspruch 10, **dadurch gekennzeichnet, dass** der Schritt des Verbindens des ersten Abschnitts und des zweiten Abschnitts an dem ersten Mitnehmerelement (11) erfolgt.

12. Verfahren nach einem der Ansprüche 10 oder 11, **dadurch gekennzeichnet, dass** der erste und/oder der zweite Schnitt, welcher in dem Schneideschritt ausgeführt wird, an dem zweiten Mitnehmerelement (12) erfolgt.

13. Verfahren nach einem der Ansprüche 10 bis 12, **dadurch gekennzeichnet, dass** ein Schritt zum Entfernen des defekten Abschnitts (109) durch das zweite Mitnehmerelement (12) mittels einer Drehung desselben nach dem Schneideschritt ausgeführt wird.

14. Verfahren nach Anspruch 13, **dadurch gekennzeichnet, dass** nach dem ersten Schneideschritt und vor dem Schritt des Entfernens des defekten Abschnitts (109) ein Schritt des Bewegens des ersten Mitnehmerelements (11) und des zweiten Mitnehmerelements (12) reziprok voneinander weg vorgesehen ist, wobei sie gestoppt werden.

15. Verfahren nach Anspruch 14, **dadurch gekennzeichnet, dass** nach dem Schritt des Entfernens des defekten Abschnitts ein Schritt vorgesehen ist, in welchem das erste Mitnehmerelement (11) und das zweite Mitnehmerelement (12) wieder nahe zueinander bewegt werden, wobei sie gestoppt werden.

16. Verfahren nach einem der Ansprüche 10 bis 15, **dadurch gekennzeichnet, dass** der erste Schnitt und der zweite Schnitt entlang jeweiliger Schnittlinien derart ausgeführt werden, dass eine anschließende Überlappung der freien Enden (113, 116) des ersten Abschnitts (111) und des zweiten Abschnitts (112) vor dem Verbindungsschritt ermöglicht wird, um die vordefinierte Teilung (p) wiederherzustellen.

## Revendications

1. Appareil (10) pour couper et joindre une bande continue (100) de produits (101) emballés dans une rangée, dans lequel lesdits produits (101) sont espacés selon un pas prédéfini (p) et séparés par une pluralité de soudures de séparation (107), dont chacune est présente entre deux desdits produits (101) adjacents, et dans lequel lesdites soudures de séparation (107) sont espacées selon ledit pas prédéfini (p) et sont disposées parallèlement les unes aux autres, ledit appareil (10) comprenant un premier élément de traînage (11) motorisé configuré pour amener ladite bande continue (100) de produits (101) à avancer dans une direction d'avance (SA) sensiblement perpendiculaire auxdites soudures de séparation (107) ; des moyens de capteur (13) disposés en amont dudit premier élément de traînage (11) et configurés pour détecter une section défectueuse (109) sur ladite bande continue (100), tandis que cette dernière est amenée à avancer par ledit premier élément de traînage (11), dans lequel ladite section défectueuse (109) comprend un ou plusieurs produits défectueux (108) ; des moyens de coupe (14) configurés pour couper ladite bande continue (100) dans une direction parallèle auxdites soudures de séparation (107) afin de séparer ladite section défectueuse (109) de ladite bande continue (100), à la suite de la détection par lesdits moyens de capteur (13) de ladite section défectueuse (109), lesdits moyens de coupe (14) étant disposés en amont dudit premier élément de traînage (11) par rapport à un mouvement d'avance de la bande continue (100) ; ladite bande continue (100) étant ainsi séparée en deux sections (111, 112), une première section (111) et une seconde section (112), respectivement, d'un côté par rapport à ladite section défectueuse (109) et d'un autre côté par rapport à ladite section défectueuse (109) ; ledit appareil (10) étant **caractérisé en ce qu'**il comprend également un second élément de traînage (12) motorisé configuré pour déplacer, après le retrait de la section défectueuse (109), ladite première section (111) et/ou ladite seconde section (112), de manière à rapprocher ladite première section (111) et ladite seconde section (112) réciproquement jusqu'à ce que les extrémités libres respectives (113, 116) se rencontrent afin de rétablir ledit pas prédéfini (p), ledit second élément de traînage (12) étant disposé en amont dudit premier élément de traînage (11) et en aval desdits moyens de capteur (13) par rapport au mouvement d'avance de la bande continue (100) ; des moyens de jonction (15) configurés pour joindre ensemble les extrémités libres (13, 116) de ladite première section (111) et de ladite seconde section (112), après que les première et seconde sections ont été amenées à se rencontrer, de manière à recréer ladite bande continue (100) avec les produits (101) espacés par ledit pas prédéfini (p) ; et une unité de commande (16) connectée au moins auxdits moyens de capteur et audit premier élément de traînage (11) et configurée pour commander sélectivement ce dernier de sorte qu'il s'arrête lorsque lesdits moyens de jonction réalisent la jonction de ladite première section (111) et de ladite seconde section (112), ainsi que pendant au moins une période de temps prédéfinie comprise entre le moment où lesdits moyens de coupe (14) effectuent la coupe de ladite section défectueuse (109) et le moment où ledit second élément de traînage (12) rapproche la première section et la seconde section l'une de l'autre.

2. Appareil (10) selon la revendication 1, **caractérisé en ce que** le second élément de traînage (12) est pourvu d'au moins une fente (23, 24) et lesdits moyens de coupe (14) comprennent un couteau (28) configuré pour être inséré dans ladite au moins une fente (23, 24) afin de réaliser une première coupe ou une seconde coupe de ladite bande continue (100), ladite section défectueuse (109) étant entre lesdites première et seconde coupes.

3. Appareil (10) selon la revendication 1 ou 2, **caractérisé en ce que** ledit second élément de traînage (12) motorisé est configuré pour déplacer ladite seconde section (112) le long de ladite direction d'avance (SA).

4. Appareil (10) selon l'une quelconque des revendications 1 à 3, **caractérisé en ce qu'**il comprend des moyens d'actionnement configurés pour rapprocher ledit premier élément de traînage (11) et ledit second élément de traînage (12) ou les éloigner réciproquement l'un de l'autre.

5. Appareil (10) selon l'une quelconque des revendications 1 à 4, **caractérisé en ce que** lesdits premier et second éléments de traînage (11, 12) sont disposés de manière à être tangents dans une zone d'échange (17) où ladite bande continue (100) passe dudit second élément de traînage (12) audit premier élément de traînage (11), tandis que ladite bande continue (100) est amenée à avancer dans ladite direction d'avance (SA).

6. Appareil (10) selon l'une quelconque des revendications 1 à 5, **caractérisé en ce que** ledit premier élément de traînage (11) et/ou ledit second élément de traînage (12) comprennent chacun un élément tournant autour d'un axe de rotation respectif (Y1, Y2).

7. Appareil (10) selon l'une quelconque des revendications 1 à 6, **caractérisé en ce que** ledit premier élément de traînage (11) est pourvu de premiers moyens d'aspiration pour retenir temporairement ladite bande continue (100) pour un segment dans ladite direction d'avance (SA).

8. Appareil (10) selon l'une quelconque des revendications 1 à 7, **caractérisé en ce que** ledit second élément de traînage (12) est muni de seconds moyens d'aspiration pour retenir temporairement ladite première section (111) et/ou ladite seconde section (112) de ladite bande continue (100) contre une surface de support (22).

9. Appareil (10) selon l'une quelconque des revendications 1 à 8, **caractérisé en ce que** ledit premier élément de traînage (11) est pourvu d'une pluralité de compartiments (21) espacés les uns des autres par ledit pas prédéfini (p) et dimensionnés de manière à recevoir chacun l'un desdits produits (101) de ladite bande continue (100).

10. Procédé pour couper et joindre une bande continue (100) de produits (101) emballés dans une rangée, comprenant, successivement, une étape de préparation d'une bande continue (100) de produits (101) disposés dans une rangée et espacés selon un pas prédéfini (p) et séparés par une pluralité de soudures de séparation (107), dont chacune est présente entre deux produits (101) adjacents, dans lequel les soudures de séparation (107) sont espacées selon ledit pas prédéfini (p) et sont disposées parallèlement les unes aux autres ; une étape d'avancement de ladite bande continue (100) de produits (101) dans une direction d'avance (SA) sensiblement perpendiculaire auxdites soudures de séparation (107), ladite étape d'avancement étant réalisée au moyen d'un premier élément de traînage (11) motorisé ; une étape de détection, au moyen de moyens de capteur (13) disposés en amont dudit premier élément de traînage (11), d'une section défectueuse (109) sur ladite bande continue (100), tandis que cette dernière avance dans ladite étape d'avancement, dans lequel ladite section défectueuse (109) comprend un ou plusieurs produits défectueux (108) ; à la suite de la détection de ladite section défectueuse (109) par lesdits moyens de capteur (13), une étape de coupe, dans laquelle il est prévu d'effectuer une première et une seconde coupes respectivement, espacées l'une de l'autre et parallèles auxdites soudures de séparation (107), au moyen de moyens de coupe (14), afin de séparer ladite section défectueuse (109) de ladite bande continue (100), lesdites première et seconde coupes étant effectuées en amont dudit premier élément de traînage (11) par rapport à un mouvement d'avance de la bande continue (100), cette dernière étant ainsi séparée en deux sections (111, 112), une première section (111) et une seconde section (112), respectivement d'un côté par rapport à ladite section défectueuse (109) et de l'autre côté par rapport à ladite section défectueuse (109) ; **caractérisé en ce qu'**il comprend une étape d'approche, à la suite du retrait de la section défectueuse (109), dans laquelle ladite première section (111) et ladite seconde section (112) sont rapprochées l'une de l'autre réciproquement jusqu'à ce que les extrémités libres respectives (113, 116) se rencontrent pour rétablir ledit pas prédéfini (p), ladite étape d'approche étant réalisée au moyen d'un second élément de traînage (12) motorisé, entraîné pour déplacer ladite première section (111) et/ou ladite seconde section (112), ledit second élément de traînage (12) étant disposé en amont dudit premier élément de traînage (11) par rapport au mouvement d'avance de la bande continue (100) ; une étape de jonction desdites extrémités libres (113, 116) de ladite première section (111) et de ladite seconde section (112) l'une à l'autre, de manière à recréer ladite bande continue (100) avec la distance des produits (101) dudit pas prédéfini (p), ledit premier élément de traînage (11) étant arrêté pendant l'étape de jonction, ainsi que pendant au moins une période de temps prédéfinie comprise entre l'étape de coupe et l'étape ultérieure d'approche desdites première et seconde sections, et enfin, une étape de ré-entraînement dudit premier élément de traînage (11) pour amener la bande continue (100) recréée de produits (101) à avancer dans la direction d'avance (SA).

11. Procédé selon la revendication 10, **caractérisé en ce que** ladite étape de jonction de la première section et de la seconde section se produit sur ledit premier élément de traînage (11).

12. Procédé selon l'une des revendications 10 ou 11, **caractérisé en ce que** ladite première et/ou ladite seconde coupe effectuées dans l'étape de coupe se produisent sur ledit second élément de traînage (12).

13. Procédé selon l'une quelconque des revendications 10 à 12, **caractérisé en ce qu'**une étape de retrait de ladite section défectueuse (109) est réalisée par ledit second élément de traînage (12), au moyen d'une rotation de celui-ci, après ladite étape de coupe.

14. Procédé selon la revendication 13, **caractérisé en ce qu'**après la première étape de coupe et avant l'étape de retrait de la section défectueuse (109), il est prévu une étape consistant à éloigner ledit premier élément de traînage (11) et le second élément de traînage (12) réciproquement l'un par rapport à l'autre, alors qu'ils sont arrêtés.

15. Procédé selon la revendication 14, **caractérisé en ce qu'**après l'étape de retrait de ladite section défectueuse, il est prévu une étape consistant à rapprocher ledit premier élément de traînage (11) et ledit second élément de traînage (12) l'un de l'autre à nouveau, alors qu'ils sont arrêtés.

16. Procédé selon l'une quelconque des revendications 10 à 15, **caractérisé en ce que** la première coupe et la seconde coupe sont effectuées le long de lignes de coupe respectives de manière à permettre un chevauchement ultérieur desdites extrémités libres (113, 116) de ladite première section (111) et de ladite seconde section (112) avant l'étape de jonction, de manière à rétablir ledit pas prédéfini (p).
